# FASCICULE DE BREVET EUROPEEN

(11) **EP 3 476 438 B1**
(45) Date de publication et mention de la délivrance du brevet: **05.08.2020**
(21) Numéro de dépôt: 18201761.6
(22) Date de dépôt: 22.10.2018
(51) Int. Cl.: A63B 4/00, A63B 71/00

(54) **POUTRE DE GYMNASTIQUE COMPORTANT UN COMPOSÉ MULTICOUCHE ÉLASTIQUE**
GYMNASTIK-BALKEN, DER EINEN ELASTISCHEN MEHRSCHICHTIGEN VERBUND UMFASST
GYMNASTICS BEAM WITH AN ELASTIC MULTILAYER COMPOUND

(30) Priorité: 27.10.2017 FR 1760185
(43) Date de publication de la demande: 01.05.2019
(73) Titulaire: JFS B.V., 5709 AE Helmond (NL)
(72) Inventeur: VENHUIZEN, Seerp, 5712HM SOMEREN (NL)
(74) Mandataire: Santarelli

(56) Documents cités:
- DE-A1- 2 515 253
- DE-A1- 2 918 934
- DE-U1-202005 014 583
- FR-A- 1 549 312
- FR-A1- 2 655 552
- US-A- 3 990 697

## Description

La présente invention concerne le domaine technique des appareils de gymnastique artistique également appelés agrès, et plus particulièrement le domaine des poutres.

Une poutre, est un agrès utilisé en gymnastique artistique féminine. Il s'agit d'une poutre rectangulaire allongée surélevée par rapport au sol par un pied ou un support à chacune de ses extrémités.

Une poutre est couramment réalisée par un profilé en aluminium ou en tout autre matériau équivalent ayant des propriétés mécaniques similaires et une bonne durabilité, recouvert d'un revêtement par exemple en PVC (polychlorure de vinyle), cuir, ou en cuir synthétique.

La géométrie et les dimensions d'une poutre sont imposés par des normes, par exemple les normes de la Fédération Internationale de Gymnastique dites normes « FIG ». Par exemple, une poutre doit avoir une longueur de cinq mètres et une largeur de dix centimètres au niveau de sa surface supérieure sur laquelle évoluent les gymnastes. Les normes imposent également des caractéristiques pour ce qui concerne la rigidité de la poutre, en particulier sa résistance à la flexion sous charge.

Les normes FIG prévoient que la surface supérieure doit avoir des propriétés permettant d'amortir les chocs et de protéger les articulations et les membres des gymnastes. Elle doit par ailleurs être élastique pour soutenir les sauts. De manière antinomique, les normes FIG prévoient que la sécurité d'appui doit être garantie par la poutre. Pour cela, l'élasticité doit être répartie de manière équilibrée afin de ne pas occasionner d'instabilité d'appui.

En d'autres termes, les poutres doivent respecter des critères en termes de force d'impact, de déflexion ou enfoncement de la surface à l'impact, et de rebond.

La force d'impact doit être limitée pour protéger les articulations des gymnastes. L'enfoncement doit être limité et surtout le comportement de la poutre pour ce qui concerne l'enfoncement doit être le même sur toute la surface supérieure de la poutre pour garantir une bonne stabilité. Le rebond, qui se traduit par l'énergie restituée, doit être dans une certaine plage de sorte à permettre la réception des gymnastes tout en permettant l'enchaînement de figures nécessitant un certain rebond.

Dans ce contexte, les poutres généralement employées, bien que respectant les normes en vigueur, peuvent être assez traumatisantes pour les articulations des gymnastes.

Une poutre de gymnastique améliorée est disponible commercialement. Cette poutre comporte au niveau de sa surface supérieure un composé multicouche comportant deux couches de mousse Ethylène Vinyl Acétate ou mousse « EVA », séparées par une plaque intermédiaire rigide. Cette poutre présente une solution améliorée par rapport aux poutres classiques pour ce qui concerne la réduction de la force d'impact, mais elle se révèle peu satisfaisante pour ce qui concerne la stabilité.

Le document FR2655552 divulgue une poutre constituée de manière analogue, dans laquelle une plaque rigide par exemple en bois est interposée entre deux couches souples.

La présente invention a pour but de proposer une poutre de gymnastique optimisée pour ce qui concerne la limitation de la force d'impact et donc la protection des articulations des gymnastes, tout en offrant une bonne stabilité et un rebond satisfaisant.

L'invention porte ainsi sur une poutre de gymnastique comportant un profilé rigide recouvert d'une housse, le profilé comportant une surface plane supérieure sur laquelle est ménagé un composé multicouche élastique constitué de deux couches, à savoir une couche supérieure et une couche inférieure en contact avec la surface plane du profilé. La couche supérieure est une couche d'un matériau caoutchouteux et la couche inférieure est une couche d'un matériau élastique de raideur inférieure à la raideur dudit matériau caoutchouteux de la couche supérieure.

La couche supérieure en matériau caoutchouteux est choisie et dimensionnée de sorte à être suffisamment rigide pour répartir l'effort d'impact dans la couche inférieure, et garantir ainsi un comportement uniforme de la surface de la poutre. Cela offre une bonne sécurité d'appui ou stabilité, qui est ressentie par la gymnaste et lui permet d'avoir confiance lors de l'exécution de son exercice à la poutre. Cette stabilité est objectivée par la mesure d'un enfoncement égal ou sensiblement égal pour une sollicitation identique, sur toute la surface supérieure de la poutre. La couche supérieure est néanmoins suffisamment élastique pour ne pas être traumatisante, et pour offrir un rebond suffisant. La couche inférieure est choisie et dimensionnée pour absorber l'énergie d'impact autant que possible, sans pénaliser la sécurité d'appui.

La couche supérieure peut être collée à la couche inférieure.

La couche supérieure peut comporter des granulés ou des fibres de caoutchouc et un liant.

Le liant peut par exemple être de type polyuréthane ou à base de polyuréthanne

La couche supérieure peut présenter une caractéristique contrainte-déformation en compression comprise entre 0,20 et 0,40 N/mm² à 25% de compression, par exemple de l'ordre de 0,30 N/mm².

La couche inférieure peut être en mousse de polyuréthane.

La couche inférieure peut notamment avoir une masse volumique comprise entre 250 et 450 kg par mètre-cube, par exemple 350 kg par mètre cube.

Le composé multicouche peut être collé à la surface plane supérieure du profilé.

La couche supérieure peut avoir par exemple une épaisseur comprise entre 3 mm et 20 mm, par exemple 12 mm.

La couche inférieure peut avoir par exemple une épaisseur comprise entre 10 mm et 30 mm, par exemple 20 mm.

D'autres particularités et avantages de l'invention apparaîtront encore dans la description ci-après.

Aux dessins annexés, donnés à titre d'exemples non limitatifs :
- la figure 1 présente selon une vue schématique en trois dimensions, une poutre de gymnastique ;
- la figure 2 présente, selon une vue en coupe, une poutre de gymnastique conforme à un mode de réalisation de l'invention.

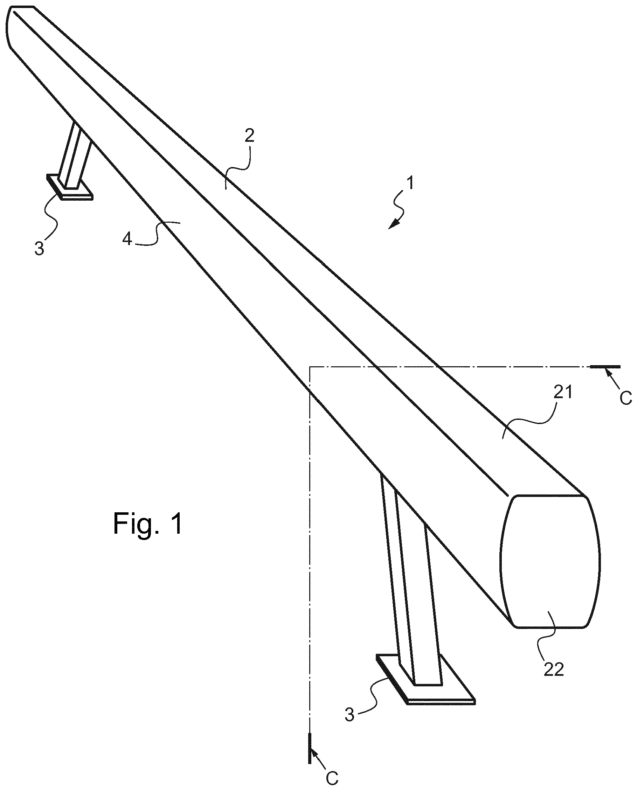

La figure 1 présente une poutre de gymnastique 1. Une poutre de gymnastique 1 est un agrès comportant une poutre 2 à proprement parler, c'est-à-dire un support horizontal allongé, qui comporte une surface supérieure 21 sur laquelle une gymnaste peut évoluer. La poutre 2 a une longueur de cinq mètres, et sa surface supérieure 21 a une largeur de dix centimètres. La poutre 2 a un profil ayant une largeur maximale de treize centimètres. La poutre 2 est supportée par deux pieds formant des supports de poutre 3. Ces supports de poutre 3 maintiennent la poutre 2 dans une position stable même lorsqu'elle est utilisée par un gymnaste. Ils peuvent permettre un réglage en hauteur ou même être réglables élastiquement en fournissant aux gymnastes plusieurs positions de rigidité.

La poutre 2 peut être réalisée en n'importe quel matériau approprié tel que le bois ou l'aluminium. La poutre 2 est finie par un embout de poutre 22 qui est avantageusement souple.

La poutre 2 est recouverte d'un revêtement (distinct du composé multicouche ci-après décrit), se présentant par exemple sous la forme d'un fourreau. Sans être glissant, le revêtement de la surface supérieure de la poutre doit permettre les rotations et les mouvements sans effort. En particulier, le matériau du revêtement ne doit pas provoquer de brûlures cutanées. Ainsi, le revêtement employé peut être constitué, ou présenter une couche extérieure de cuir, cuir synthétique, PVC, suédine, ou tout autre matériau naturel ou synthétique approprié.

Le revêtement 4 est généralement collé, agrafé et/ou attaché par tout autre moyen à la poutre. Cela évite tout glissement du revêtement 4 sur la poutre 2 lors de l'évolution d'une gymnaste sur la poutre.

L'aspect général extérieur d'une poutre conforme à l'invention est identique ou très similaire à celui d'une poutre conforme à l'état de la technique. La figure 1 correspond ainsi à la représentation tant d'une poutre conforme à l'état de la technique que d'une poutre conforme à l'invention.

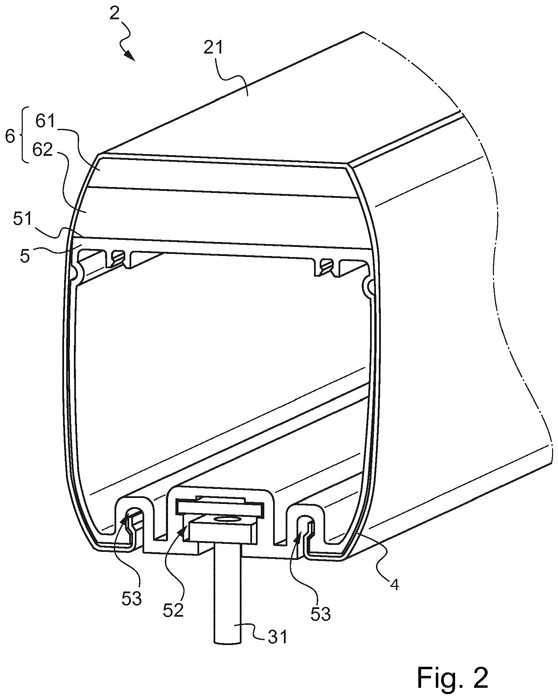

La figure 2 présente selon une vue en coupe, selon le plan de coupe C-C représenté à la figure 1, une poutre conforme à un mode de réalisation de l'invention.

La poutre 2 comporte un profilé 5. Dans l'exemple ici représenté, le profilé 5 est métallique, par exemple en aluminium ou en alliage d'aluminium. Le profilé 5 s'étend longitudinalement sur toute la longueur de la poutre 2 dont il définit la forme générale. Le profilé 5 est rigide, et présente en particulier une grande résistance à la flexion. Le profilé 5 assure la rigidité générale de l'agrès. Le profilé 5 présente une forme en section complexe. En partie basse, il peut être conformé pour permettre la fixation des supports de poutre 3. Dans l'exemple ici représenté, le profilé forme une glissière 52. Dans la glissière 52, un pion de fixation 31 peut être introduit et bloqué au besoin afin d'assurer la fixation ou le réglage d'un support de poutre 3. Selon le type de support de poutre, il peut comporter typiquement une ou deux liaisons avec le profilé 5, par exemple via des pions de fixation 31 comme dans l'exemple ici représenté. Le pion 31 peut par exemple être lié à une contrefiche reliant la poutre 3 à une jambe principale inclinée d'un support de poutre, afin de régler la hauteur de la poutre 2 vis-à-vis du sol.

En partie basse, le profilé 5 comporte en outre deux gorges 53 permettant la fixation fiable et le cas échéant la bonne mise en tension du revêtement 4 sur la poutre 2.

Le profilé 5 comporte en partie haute une surface plane 51. Dans le cadre de l'invention, la surface plane 51 est destinée à recevoir un composé multicouche 6.

La hauteur du profilé 5 est dépendante de l'épaisseur du composé multicouche 6, et vice-versa. En effet, afin de respecter les normes en vigueur, notamment les normes FIG, une poutre de gymnastique doit avoir une hauteur, selon un axe vertical, de 16 cm. Ainsi, la hauteur du profilé 5, entre un point bas et la surface plane 51 à laquelle s'additionne l'épaisseur du composé multicouche 6, doit être telle que la hauteur finale de la poutre 2 soit de 16 cm. L'épaisseur du revêtement 4 peut être prise en compte mais peut généralement être négligée du fait d'une tolérance de 0,5 cm pour la hauteur de la poutre 2 selon la norme FIG.

Par exemple, pour un composé multicouche 6 ayant une épaisseur totale de 32 mm, la hauteur du profilé 5 sera de l'ordre de 128mm. L'épaisseur du composé multicouche pour déterminer la hauteur du profilé 5 s'entend comme l'épaisseur après installation sur la poutre. Le composé 6 étant flexible, il peut être légèrement écrasé par la tension du revêtement 4. De même, si l'épaisseur du revêtement 4 est prise en compte, la hauteur du profilé 5 sera réduite de deux fois l'épaisseur du revêtement 4, car il y a une couche de revêtement au niveau de la surface supérieure 21 de la poutre 2, et une couche sous la poutre 2.

Pour ce qui concerne la largeur de la poutre 2, sa largeur maximale doit être de 13 cm tandis que la largeur de sa surface supérieure est de 10 cm. Pour simplifier la mise en œuvre de l'invention, il est possible, comme dans le mode de réalisation illustré à la figure 2, que le profilé 5 présente une surface supérieure 51 correspondant à la largeur maximale de la poutre, c'est-à-dire 13 cm selon les normes FIG, diminuée le cas échéant de deux fois l'épaisseur du revêtement 4. La restriction de largeur menant à la largeur de 10 cm pour la surface supérieure de la poutre 2 est obtenue par un composé 6 de forme sensiblement trapézoïdale, dont les côtés non-parallèles peuvent présenter une forme légèrement bombée.

Le composé multicouche comporte deux couches, à savoir une couche supérieure 61 et une couche inférieure 62.

La couche inférieure 62 est une couche en mousse relativement souple. Elle assure en grande partie la fonction d'absorption d'énergie. La couche inférieure peut être formée de mousse de polyuréthane, ou à base de polyuréthane. La mousse employée peut avoir une densité comprise entre 150 kg / m³ et 650 kg / m³, par exemple entre 250 kg / m³ et 450 kg / m³, par exemple 350 kg / m³.

La mousse employée pour la couche inférieure 62 peut alternativement être une mousse de polyéthylène.

La couche supérieure 61 est une couche élastique souple, mais néanmoins de raideur supérieure à celle de la couche inférieure 62. La couche supérieure 61 est suffisamment rigide pour répartir l'énergie d'un impact sur une surface importante de la couche inférieure 61, qui assure une grande partie de la fonction d'absorption d'énergie. Par exemple, la couche supérieure 62 peut présenter une caractéristique contrainte-déformation en compression comprise entre 0,20 et 0,40 N/mm², par exemple de l'ordre de 0,30 N/mm².

Afin de présenter les caractéristiques souhaitées de raideur et de restitution d'énergie, la couche supérieure 61 est formée d'un matériau caoutchouteux. En particulier, la couche supérieure 61 comporte des particules de caoutchouc sous la forme de granulés et/ou de fibres. Les particules de caoutchouc sont liées par un liant. Le liant peut être en polyuréthane ou à base de polyuréthane. Tout autre liant souple adapté à la liaison des particules de caoutchouc peut être employé pour la formation du matériau constitutif de la couche supérieure 61.

L'épaisseur respective de la couche supérieure 61 et de la couche inférieure 62 dépend bien évidemment des propriétés des matériaux qui constituent lesdites couches. Avec les matériaux précités, la couche supérieure 61 peut avoir une épaisseur comprise entre 3 mm et 20mm, par exemple 12mm. La couche inférieure peut avoir une épaisseur comprise entre 10 mm et 30 mm, par exemple 20 mm.

La couche supérieure 61 et la couche inférieure 62 sont avantageusement collées l'une à l'autre. La colle employée doit d'une part être compatible des matériaux employés pour former chaque couche du composé multicouche. La colle doit en outre être suffisamment souple. Elle doit modifier le moins possible les propriétés mécaniques de chaque couche, et influencer le moins possible le comportement du composé multicouche. La colle employée peut être par exemple de type polyuréthane, néoprène, silicone.

Le composé 6 peut avantageusement être lui-même collé à la surface plane 51 du profilé 5. La colle employée pour cela peut être de tout type compatible avec le matériau constitutif de la couche inférieure 62 d'une part, et du profilé 5 d'autre part.

Dans un mode de réalisation de l'invention comportant :
- une couche supérieure de 12mm d'épaisseur constituée de granulés de caoutchouc avec un liant polyuréthane, présentant une masse spécifique de 374 kg/m³ et une caractéristique contrainte-déformation en compression de 0,30 N/mm² à 25% de compression mesurée selon la norme DIN EN ISO 3386-2 ; et
- une couche inférieure constituée de mousse polyuréthane avec une densité de 350 kg/m³,
on a mesuré les résultats suivants, respectivement en un point B médian de la poutre, c'est-à-dire au milieu de la surface supérieure 21, et un point A situé à 1cm du bord de la surface supérieure 21 :
Force d'impact : 4834N au point A ; 4721N au point B ;
Enfoncement : 17mm au point A, 17mm au point B ;
Rebond : 63mm au point A, 63mm au point B.

Ces mesures peuvent être comparées à des mesures réalisées sur une poutre classique, telle que connue dans l'état de la technique :
Force d'impact : 2002N au point A ; 2004N au point B ;
Enfoncement : 10,5mm au point A, 10,6mm au point B ;
Rebond : 25mm au point A, 21mm au point B.

L'invention, dans ce mode de réalisation, permet ainsi une réduction importante, de plus de 60%, de la force d'impact, tout en conservant une parfaite stabilité (une instabilité se traduit par la différence de l'enfoncement entre le point A et le point B). Le rebond, bien qu'augmenté, reste dans des limites acceptables, tant d'un point de vue réglementaire que des sensations de la gymnaste.

Une poutre conforme à l'invention comporte ainsi un composé multicouche 6 permettant une limitation des forces d'impact par absorption de l'énergie à l'impact, par exemple lors de la réception d'une gymnaste sur la poutre. Cela limite fortement le risque de blessures, que ce soit suite à des réceptions répétées sur la poutre ou en cas de mauvaise réception ou d'accident. La sécurité des appuis, ou stabilité, est cependant conservée. La gymnaste évoluant sur une poutre conforme à l'invention est ainsi en sécurité et en confiance.

## Revendications

1. Poutre de gymnastique comportant un profilé (5) rigide recouvert d'un revêtement (4), le profilé (5) comportant une surface plane (51) supérieure sur laquelle est ménagé un composé multicouche (6) élastique,
**caractérisée en ce que** le composé multicouche (6) élastique est constitué de deux couches à savoir :
une couche supérieure (61), et
une couche inférieure (62) en contact avec la surface plane (51) du profilé (5),
la couche supérieure (61) étant une couche d'un matériau caoutchouteux et la couche inférieure (62) étant une couche d'un matériau élastique de raideur inférieure à la raideur dudit matériau caoutchouteux de la couche supérieure (62).

2. Poutre de gymnastique selon la revendication 1, dans laquelle la couche supérieure (61) est collée à la couche inférieure (62).

3. Poutre de gymnastique selon la revendication 1 ou la revendication 2, dans laquelle la couche supérieure (61) comporte des granulés ou des fibres de caoutchouc et un liant.

4. Poutre de gymnastique selon la revendication 3, dans laquelle le liant est de type polyuréthane ou à base de polyuréthanne.

5. Poutre de gymnastique selon l'une des revendications précédentes, dans laquelle la couche supérieure (61) présente une caractéristique contrainte-déformation en compression comprise entre 0,20 et 0,40 N/mm² à 25% de compression, par exemple de l'ordre de 0,30 N/mm².

6. Poutre de gymnastique selon l'une des revendications précédentes, dans laquelle la couche inférieure (62) est en mousse de polyuréthane.

7. Poutre de gymnastique selon l'une des revendications précédentes, dans laquelle la couche inférieure (62) a une masse volumique comprise entre 250 et 450 kg par mètre-cube, par exemple 350 kg par mètre cube.

8. Poutre de gymnastique selon l'une des revendications précédentes, dans laquelle le composé multicouche (6) est collé sur la surface plane (51) supérieure du profilé (5).

9. Poutre de gymnastique selon l'une des revendications précédentes, dans laquelle la couche supérieure (61) a une épaisseur comprise entre 3 mm et 20 mm, par exemple 12 mm.

10. Poutre de gymnastique selon l'une des revendications précédentes, dans laquelle la couche inférieure (62) a une épaisseur comprise entre 10 mm et 30 mm, par exemple 20 mm.

## Patentansprüche

1. Turnbalken, enthaltend ein starres Profil (5), das mit einer Beschichtung (4) bedeckt ist, wobei das Profil (5) eine ebene, obere Fläche (51) aufweist, auf der eine elastische Mehrschichtverbindung (6) aufgebracht ist,
**dadurch gekennzeichnet, dass**
die elastische Mehrschichtverbindung (6) aus zwei Schichten besteht, nämlich:
einer oberen Schicht (61) und
einer unteren Schicht (62) in Kontakt mit der ebenen Fläche (51) des Profils (5),
wobei die obere Schicht (61) eine Schicht aus einem Kautschukmaterial ist und die untere Schicht (62) eine Schicht aus einem elastischen Material mit einer Steifigkeit, die geringer ist als die Steifigkeit des Kautschukmaterials der oberen Schicht (62), ist.

2. Turnbalken nach Anspruch 1, wobei die obere Schicht (61) mit der unteren Schicht (62) verklebt ist.

3. Turnbalken nach Anspruch 1 oder Anspruch 2, wobei die obere Schicht (61) ein Kautschukgranulat oder -fasern und ein Bindemittel enthält.

4. Turnbalken nach Anspruch 3, wobei das Bindemittel vom Typ Polyurethan ist oder auf Polyurethanbasis besteht.

5. Turnbalken nach einem der vorangehenden Ansprüche, wobei die obere Schicht (61) eine Druckspannungs-Verformungs-Charakteristik zwischen 0,20 und 0,40 N/mm², beispielsweise im Bereich von 0,30 N/mm², bei 25 % Stauchung aufweist.

6. Turnbalken nach einem der vorangehenden Ansprüche, wobei die untere Schicht (62) aus Polyurethanschaum besteht.

7. Turnbalken nach einem der vorangehenden Ansprüche, wobei die untere Schicht (62) eine Massendichte zwischen 250 und 450 kg pro Kubikmeter, beispielsweise 350 kg pro Kubikmeter, aufweist.

8. Turnbalken nach einem der vorangehenden Ansprüche, wobei die Mehrschichtverbindung (6) mit der oberen, ebenen Fläche (51) des Profils (5) verklebt ist.

9. Turnbalken nach einem der vorangehenden Ansprüche, wobei die obere Schicht (61) eine Dicke zwischen 3 mm und 20 mm, beispielsweise 12 mm, aufweist.

10. Turnbalken nach einem der vorangehenden Ansprüche, wobei die untere Schicht eine Dicke zwischen 10 mm und 30 mm, beispielsweise 20 mm, aufweist.

## Claims

1. A gymnastics balance beam comprising a rigid elongate member (5) of specific cross-section covered with a cover (4), the elongate member (5) of specific cross-section comprising a planar upper surface (51) on which is provided an elastic multilayer composite (6).
**characterized in that** the elastic multilayer composite (6) is constituted by two layers, namely:
an upper layer (61), and
a lower layer (62) in contact with the planar surface (51) of the elongate member (5) of specific cross-section,
the upper layer (61) being a layer of rubbery material and the lower layer (62) being a layer of an elastic material of stiffness less than the stiffness of said rubbery material of the upper layer (62).

2. A gymnastics balance beam according to claim 1, wherein the upper layer (61) is bonded to the lower layer (62).

3. A gymnastics balance beam according to claim 1 or claim 2, wherein the upper layer (61) comprises rubber fibers or beads and a binder.

4. A gymnastics balance beam according to claim 3, wherein the binder is of polyurethane type or polyurethane-based.

5. A gymnastics balance beam according to one of the preceding claims, wherein the upper layer (61) has a stress-strain characteristic in compression comprised between 0.20 and 0.40 N/mm² at 25% compression, for example of the order of 0.30 N/mm².

6. A gymnastics balance beam according to one of the preceding claims, wherein the lower layer (62) is of polyurethane foam.

7. A gymnastics balance beam according to one of the preceding claims, wherein the lower layer (62) has a mass per unit volume comprised between 250 and 450 kg per cubic meter, for example 350 kg per cubic meter.

8. A gymnastics balance beam according to one of the preceding claims, wherein the multilayer composite (6) is bonded to the planar upper surface (51) of the elongate member (5) of specific cross-section.

9. A gymnastics balance beam according to one of the preceding claims, wherein the upper layer (61) has a thickness comprised between 3 mm and 20 mm, for example 12 mm.

10. A gymnastics balance beam according to one of the preceding claims, wherein the lower layer (62) has a thickness comprised between 10 mm and 30 mm, for example 20 mm.
